# EUROPEAN PATENT SPECIFICATION

(11) **EP 1 684 583 B1**
(45) Date of publication and mention of the grant of the patent: **14.12.2016**
(21) Application number: 04811204.9
(22) Date of filing: 16.11.2004
(51) Int. Cl.: A01N 25/02, A01N 25/32, A01N 43/40, A01N 43/42, A01P 13/00

(54) **EMULSIFIABLE CONCENTRATES CONTAINING ADJUVANTS**
HILFSSTOFFHALTIGE EMULSIONSKONZENTRATE
CONCENTRES EMULSIFIABLES CONTENANT DES ADJUVANTS

(30) Priority: 17.11.2003 US 520561 P
(43) Date of publication of application: 02.08.2006
(73) Proprietor: Syngenta Participations AG, 4058 Basel (CH)
(72) Inventor: FOWLER, Jeffrey D., SYNGENTA CROP PROTECTION, INC, Greensboro, North Carolina 27409 (US); HAESSLIN, Hans Walter, Deceased (DE); VOGT, Manfred, SYNGENTA CROP PROTECTION MUNCHWILEN AG, CH-4333 Munchwilen AG (CH); WEBER, Michelle, SYNGENTA CROP PROTECTION, INC., Greensboro, North Carolina 27409 (US)
(74) Representative: Syngenta International AG
(86) International application number: PCT/US2004/038414
(87) International publication number: WO 2005/048706

(56) References cited:
- WO-A1-02/067682
- US-A- 4 881 966
- US-A- 5 985 797
- US-A1- 2003 181 333
- US-B1- 6 479 432
- US-B1- 6 479 432
- NALEWAJA J D ED - BEATTIE G ET AL: "Oils as and with herbicides", 1 January 2002 (2002-01-01), SPRAY OILS BEYOND 2000: SUSTAINABLE PEST AND DISEASE MANAGEMENT,, PAGE(S) 290 - 300, XP001525821, ISBN: 978-1-86341-902-4 * page 291, column 1, line 22 - line 33 * * page 292, column 2, line 7 - line 22 * * page 293, column 1, line 45 - column 2, line 3 * * page 294, column 1, line 31 - column 2, line 1 * * page 294, column 2, line 34 - page 295, column 1, line 6 * * tables 2, 3 *
- DATABASE CA [Online] CHEMICAL ABSTRACTS SERVICE, COLUMBUS, OHIO, US; 29 May 1993 (1993-05-29), MANTHEY, FRANK A. ET AL: "Foliar absorption and phytotoxicity of quizalofop with lipid compounds", XP002671346, retrieved from STN Database accession no. 1993:207432 & MANTHEY, FRANK A. ET AL: "Foliar absorption and phytotoxicity of quizalofop with lipid compounds", WEED SCIENCE , 40(4), 558-62 CODEN: WEESA6; ISSN: 0043-1745, 1992, XP009157386,
- DATABASE CA [Online] CHEMICAL ABSTRACTS SERVICE, COLUMBUS, OHIO, US; 23 August 1986 (1986-08-23), NALEWAJA, JOHN D. ET AL: "Absorption and translocation of herbicides with lipid compounds", XP002671347, retrieved from STN Database accession no. 1986:456273 & NALEWAJA, JOHN D. ET AL: "Absorption and translocation of herbicides with lipid compounds", WEED SCIENCE , 34(4), 564-8 CODEN: WEESA6; ISSN: 0043-1745, 1986, XP009157385,

## Description

The present invention relates to stable emulsifiable concentrates comprising an oil adjuvant and at least one member selected from the group consisting of herbicidally active 2-[4-(5-halogen-3 -fluoropyridin-2-yloxy)-phenoxy]-propionic acid derivatives and optionally quinoline derivative safeners based on cloquintocet.

The present invention also relates to herbicidal compositions for controlling grasses and weeds in crops of useful plants, especially in crops of maize and cereals, prepared from these emulsifiable concentrates, and to the use of such compositions in controlling weeds in crops of useful plants.

### BACKGROUND OF THE INVENTION

The use of adjuvants for improving the biological activity and/or spray properties of pesticidal compositions is well known. However, certain components, e.g., active ingredients or antidotes, useful in pesticidal formulations are chemically unstable or have limited chemical stability. These stability issues can limit the ability to formulate pesticidal concentrates and restrict the use of additional components, such as adjuvants, in the concentrate formulations.

There is a need for chemically stable formulations containing components having limited chemical stability. Further, it is desirable to have pesticidal concentrates containing "built-in" adjuvants in order to avoid having to add these adjuvants as a tank-mix component.

Emulsifiable concentrate (EC) formulations conventionally contain an active ingredient, one or more surfactants which act as emulsifiers upon dilution of the EC with water and a water immiscible solvent. Typical solvents for conventional EC formulations are aromatic hydrocarbons. These solvents have very low solubilities in water and a high capability of dissolving a wide range of active ingredients.

Due to the presence of the solvent, many pesticides formulated as an EC have advantages such as a higher degree of systemicity and higher overall activity compared to the same pesticide formulated as a wettable powder (WP), water dispersible granule (WG) or suspension concentrate (SC).

The observed efficacy of the combination of ingredients can sometimes be significantly higher than would be expected from the amounts of the individual ingredients used (synergism). The efficacy of the active components can often be improved by addition of other ingredients such as adjuvants.

In view of increasing the ease and safety of handling and dosing of these adjuvants by the end-user and in view of avoiding unnecessary packaging material, it is desirable to develop concentrated formulations which already contain such adjuvants.

US Patent No. 6,566,308 discloses EC formulations stabilized with a water-miscible polar aprotic solvent.

US4,881,966 describes a number of emulsifiable concentrates containing herbicides and safeners but does not describe the use of alkyl ester plant oil adjuvants. Nalewaja John "Oils as and with herbicides". Spray Oils Beyond 2000 : Sustainable Pest and Disease Management, pp 290-300: discloses the general use of adjuvants including methylated seed oils but does not describe specific emulsifiable concentrate compositions.

### SUMMARY OF THE INVENTION

In one embodiment, the present invention relates to an emulsifiable concentrate (EC) as defined according to claim 1.

It is also an object of the invention to provide selective pesticidal compositions obtainable by diluting the emulsifiable concentrates of the present invention in a suitable amount of water to form an oil-in-water emulsion.

It is another object of the invention to provide a method for the selective control of weeds in crops of useful plants, which method comprises treating the useful plants, their seeds or seedlings or the crop area thereof with the pesticidal compositions of the present invention.

Handling benefits of the present invention include excellent compatibility with fertilizers, low viscosity and low temperature stability, without crystallization or phase separation.

These and other objects and features of the invention will be more apparent from the detailed description set forth hereinbelow, and from the appended claims.

### DETAILED DESCRIPTION OF THE PREFERRED EMBODIMENTS

It has surprisingly been found that improved stable EC formulations containing one or more herbicidally active ingredients and at least one oil adjuvant can be produced using one or more water-immiscible solvents, an emulsifying surfactant system enabling an oil-in-water emulsion to be formed when the formulation is added to water and by controlling the pH and moisture content of the EC.

The present invention accordingly relates to an emulsifiable concentrate comprising
a) a herbicidally effective amount, which is 1 to 30 % by weight, of at least one herbicide;
b) optionally, an amount, which is effective for antagonism of a herbicide, of at least one safener;
c) 5 to 80 %, by weight of at least one oil adjuvant, wherein said oil adjuvant comprises an alkyl ester of a plant oil;
d) an amount of at least one water-immiscible solvent sufficient to keep the active ingredient and the safener in solution in the presence of the adjuvant, wherein the amount of the at least one water immiscible solvent is 5 to 70 % by weight; and
e) an emulsifying surfactant system in an amount sufficient to form an oil-in-water emulsion when the formulation is added to water, wherein the amount of the emulsifying surfactant system is between 1 and 30 % by weight;
with the proviso that a) comprises a herbicidally effective amount of at least one compound of formula I 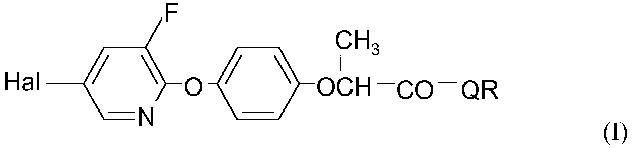 wherein Hal is halogen,
Q is oxygen or sulfur,
R is hydrogen, an alkali metal ion, or a
C₁ -C6 -alkyl group which is straight-chain or branched-chain, and which is unsubstituted or substituted by a C₃ -C₆ -alkenyl group, which is straight-chain or branched-chain, and is unsubstituted or substituted by a C₃ -C₆ -alkynyl group,
   b) comprises an amount, which is effective for antagonism of a herbicide, of at least one quinoline derivative safener comprising: cloquintocet; an alkali metal, alkaline earth metal, sulfonium or ammonium cation of cloquintocet; or cloquintocet-mexyl;
   and wherein the emulsifiable concentrate has a pH in the range of 4.5 to 8.0 when diluted to 1% concentration in distilled water; and
   wherein the emulsifiable concentrate contains less than 2.5 %, of water.

Preferred classes of herbicides for use in the emulsifiable concentrates of the present invention comprise ACCase inhibitors and Cell Division inhibitors. Preferred herbicides include compounds of formula I, as described herein, clodinafop.

These compounds are known in the art and are described in The Pesticide Manual, Twelfth Edition, British Crop Protection Council or other readily available resources.

Particularly preferred herbicides comprise compounds of formula I wherein Hal is chlorine, Q is oxygen, and R is a C₃ -C₆ -alkynyl group, preferably a propynyl group. A preferred compound within the scope of formula I is commonly referred to as clodinafop-propargyl and is described, for example, in US Patent No. 4,713,109. The terms clodinafop and clodinafop-propargyl, as used herein, include mixtures of the (R) and (S) isomers of compounds of formula I wherein Hal is chlorine, Q is oxygen, and R is a propynyl group, and wherein the ratio of (R) to (S) is in the range of from 50-100% to 50-0%, preferably 80-100% to 20-0% and more preferably 90-100% to 10-0%.

In compounds of formula I the various substituents may contribute to optical isomerism and/or stereoisomerism. All such racemic mixtures and isomers are included within the scope of the present invention.

As used herein, the term "herbicidally effective amount" means the amount of herbicide compound which adversely controls or modifies plant growth.

The emulsifiable concentrates may contain an amount, which is effective for antagonism of a herbicide, i.e., an amount which counteracts to some degree a phytotoxic response of a beneficial crop to a herbicide, of at least one safener. Safeners suitable for use in the emulsifiable concentrates of the present invention include quinoline derivatives comprising cloquintocet; an alkali metal, alkaline earth metal, sulfonium or ammonium cation of cloquintocet; and cloquintocet-mexyl. A particularly preferred quinoline derivative is cloquintocet-mexyl.

In an embodiment of the present invention, clodinafop-propargyl is preferably used together with the safener cloquintocet-mexyl. These mixtures are described, for example, in US Patent No. 4,881,966. These mixtures are commercially available in the form of an emulsifiable concentrate.

The emulsifiable concentrates may further contain a weak acid or base that is soluble or fully miscible in the formulation and that has a pKa between about 1 and 8 in an amount sufficient to obtain an emulsifiable concentrate having a pH when diluted to 1% concentration in distilled water in the range of 4.5 to 8.0. Preferred acid components include organic acids, such as acetic acid, and acidic surfactants that can also function as an emulsifier.

Esters of plant oils are alkyl esters obtainable from medium chained fatty acids by esterification with alkanols or by transesterification of the corresponding plant oils. Preferred fatty acids of these plant oils have 5 to 20, in particular 8 to 18 carbon atoms. In a preferred embodiment the methyl ester of the plant oil used is the methyl ester of canola oil.

The application and action of the oil adjuvants may be improved by combining them with surface-active substances such as non-ionic, anionic or cationic surfactants.

The emulsifying surfactant system enabling the EC to form an oil-in-water emulsion when the formulation is added to water is typically a mixture of two or more surfactants, at least one of which is a nonionic surfactant and optionally at least one of which is an anionic surfactant.

Suitable surface-active compounds are, depending on the nature of the active ingredient of formula I being formulated, non-ionic, cationic and/or anionic surfactants and mixtures of surfactants having good emulsifying, dispersing and wetting properties. Examples of suitable anionic, non-ionic and cationic surfactants are listed, for example, in U.S. Patent No. 6,063,732 column 5, line 1 to column 6, line 2.

Furthermore, the surfactants customarily employed in formulation technology, which are described, inter alia, in "Mc Cutcheon's Detergents and Emulsifiers Annual" MC Publishing Corp., Ridgewood N.J., 1981, Stache, H., "Tensid-Taschenbuch", Carl Hanser Verlag, MunichNienna, 1981 and M. and J. Ash, "Encyclopedia of Surfactants", Vol I-III, Chemical Publishing Co., New York, 1980-81, are also suitable for preparation of the herbicidal compositions according to the invention.

Anionic surfactants suitable for use in the invention may be any known in the art. The anionic surfactants may be polyarylphenol polyalkoxyether sulfates and/or phosphates; C₈₋₁₈ alcohol polyalkoxyether phosphates, carboxylates, and/or citrates; alkyl benzenesulfonic acids; C₈₋₂₀ alkyl carboxylates including fatty acids; C₈₋₂₀ alcohol sulfates; C₈₋₂₀ alcohol phosphate mono- and diesters; C₈₋₂₀ alcohol and (C₈₋₂₀ alkyl)phenol polyoxyethylene ether carboxylates, sulfates and sulfonates; C₈₋₂₀ alcohol and (C₈₋₂₀ alkyl)phenol polyoxyethylene

phosphate mono- and diesters; C₈₋₂₀ alkylbenzene sulfonates, naphthalene sulfonates and formaldehyde condensates thereof; lignosulfonates; C₈₋₂₀ alkyl sulfosuccinates and sulfosuccinamates; C₈₋₂₀ acyl glutamates, sarcosinates, isethionates and taurates; water-soluble soaps and mixtures thereof.

Exemplary polyarylphenol polyalkoxyether sulfates and phosphates include polyarylphenol polyethoxyether sulfates and phosphates, polyarylphenol polypropoxyether sulfates and phosphates, polyarylphenol poly(ethoxy/propoxy)ether sulfates and phosphates, and salts thereof. The term "aryl" includes, for example, phenyl, tolyl, naphthyl, tetrahydronaphthyl, indanyl, indenyl, styryl, pyridyl, quinolinyl, and mixtures thereof. Exemplary polyarylphenol polyethoxyether sulfates and phosphates include distyrylphenol polyethoxyether sulfates and phosphates, and tristyrylphenol polyethoxyether sulfates and phosphates. The polyarylphenol polyalkoxether sulfates and phosphates may have a degree of alkoxylation (e.g., ethoxylation) of between about 1 and about 50, preferably between about 2 and about 40, more preferably between about 5 and about 30. Commercially available polyarylphenol polyalkoxyether sulfates and phosphates include, for example, SOPROPHOR® 4 D 384 (Rhodia Corporation, Cranbury, NJ) (tristyrylphenol (EO)₁₆ sulfate ammonium salt), SOPROPHOR® 3 D 33 (Rhodia Corporation, Cranbury, NJ) (tristyrylphenol (EO)₁₆ phosphate free acid), SOPROPHOR® FLK (Rhodia Corporation, Cranbury, NJ) (tristyrylphenol (EO)₁₆ phosphate potassium salt) and SOPROPHOR® RAM/384 (Rhodia Corporation, Cranbury, NJ) (tristyrylphenol polyethoxylated ether sulfate neutralized with polyethoxylated oleylamine). In other embodiments, the polyarylphenol polyalkoxyether sulfates and phosphates may be mono-arylphenol polyalkoxyether sulfates and phosphates, such as styrylphenol polyethoxyether sulfates and phosphates.

Exemplary C₈₋₁₈ alcohol polyethoxyether phosphates, carboxylates and citrates include STEPFAC® 8180 (Stepan Corporation, Northfield, IL) (tridecylalcohol (EO)₃ phosphate), STEPFAC® 8181 (Stepan Corporation, Northfield, IL) (tridecylalcohol (EO)₆ phosphate), STEPFAC® 8182 (Stepan Corporation, Northfield, IL) (tridecylalcohol (EO)₁₂ phosphate), EMCOL® CN-6 (CK Witco Corporation, Greenwich, CT) (tridecylalcohol (EO)₆ carboxylate). The C₈₋₁₈ alcohol polyethoxyether phosphates, carboxylates and citrates may have a degree of ethoxylation of between about 1 and about 25, preferably between about 1 and about 20.

Exemplary alkylbenzene sulfonic acids and salts thereof include dodecylbenzene sulfonic acid, and metal (for example sodium or calcium), ammonia or amine salts of the alkylbenzene sulfonic acids, including dodecylbenzene sulfonic acid. Amine neutralized versions include primary amines, diamines, triamines and alkanol amines.

Additional preferred anionic surfactants include (C₈₋₁₂ alkyl)phenol polyoxyethylene ether sulfates, and (C₈₋₁₂ alkyl)phenol polyoxyethylene phosphate mono- and diesters, accompanied in each case by monovalent counterions. In one embodiment the monovalent counterion for a (C₈₋₁₂ alkyl)phenol polyoxyethylene ether sulfate or a (C₈₋₁₂ alkyl)phenol polyoxyethylene phosphate is a protonated polyoxyethylene C₁₂₋₂₀ alkylamine surfactant. More specifically, polyoxyethylene tallowamine salt of a nonylphenol polyoxyethylene ether sulfate, nonylphenol polyoxyethylene phosphate, and a blend of such nonylphenol polyoxyethylene phosphate with polyoxyethylene tallowamine.

Suitable water-soluble soaps are the alkali metal salts, alkaline earth metal salts, ammonium salts or substituted ammonium salts of higher fatty acids (C₁₀ -C₂₂), e.g. the sodium or potassium salts of oleic or stearic acid, or of natural fatty acid mixtures which can be obtained, inter alia, from coconut oil or tallow oil. Further suitable soaps are also the fatty acid methyl taurin salts.

The anionic surfactants are optionally neutralized with a basic compound. The basic compounds may be any known in the art that are capable of neutralizing the anionic surfactants. Basic compounds include, for example, inorganic bases, C₈₋₁₈ alkyl amine polyalkoxylates, alkanol amines, alkanol amides, and mixtures thereof.

Exemplary inorganic bases include ammonium hydroxides, sodium hydroxides, potassium hydroxides, calcium hydroxides, magnesium hydroxides, zinc hydroxides, and mixtures thereof. The C₈₋₁₈ alkyl amine polyalkoxylates may be, for example, C₈₋₁₈ alkyl amine polypropoxylates and/or C₈₋₁₈ alkyl amine polyethoxylates. Exemplary C₈₋₁₈ alkyl amine polyalkoxylates include tallow amine polyalkoxylates, cocoamine polyalkoxylates, oleylamine polyalkoxylates, and stearylamine polyalkoxylates. The C₈₋₁₈ alkyl amine polyethoxyates may have from about 2 to about 50 moles of ethylene oxide per molecule, more preferably from about 2 to about 20 moles of ethylene oxide per molecule. Exemplary C₈₋₁₈ alkyl amine polyethoxylates include tallow amine ethoxylates (2 moles EO or 8 moles EO), cocoamine ethoxylates, oleylamine ethoxylates, and stearylamine ethoxylates. Exemplary alkanol amines include diethanol amine and triethanol amine. Exemplary alkanol amides include oleic diethanolamide and linoleic diethanolamide, and the diethanolamides of other C₈₋₁₈ fatty acids.

The anionic surfactants may be neutralized to the inflection point in the titration curve with one or more basic compounds. One skilled in the art will recognize that the pH of the inflection will vary according to the acid and base strengths of the components being used, but will generally fall within the range of about pH 4 to about pH 9, preferably about pH 5 to about pH 7. For example, the compositions of the invention may comprise at least one polyarylphenol polyalkoxyether sulfate, polyarylphenol polyalkoxyether phosphate, C₈₋₁₈ alcohol polyalkoxyether phosphates, C₈₋₁₈ alcohol polyalkoxyether carboxylates, C₈₋₁₈ alcohol polyalkoxyether citrates, and/or alkyl benzenesulfonic acids neutralized to the inflection point in the titration curve with one or more basic compounds. The basic compound used to neutralize the different anionic surfactants may be the same or different.

In still other embodiments, the compositions of the invention comprise mixtures of at least two anionic surfactants selected from polyarylphenol polyalkoxyether sulfates, polyarylphenol polyalkoxyether phosphates, C₈₋₂₀ alkyl carboxylates including fatty acids, C₈₋₂₀ alcohol sulfates, C₈₋₂₀ alcohol phosphate mono- and diesters, C₈₋₂₀ alcohol and (C₈₋₂₀ alkyl)phenol polyoxyethylene ether carboxylates, sulfates and sulfonates, C₈₋₂₀ alcohol and (C₈₋₂₀ alkyl)phenol polyoxyethylene phosphate mono- and diesters, C₈₋₂₀ alkylbenzene sulfonates, naphthalene sulfonates and formaldehyde condensates thereof, lignosulfonates, C₈₋₂₀ alkyl sulfosuccinates and sulfosuccinamates, and/or C₈₋₂₀ acyl glutamates, sarcosinates, isethionates and taurates neutralized to the inflection point in the titration curve with one or more basic compounds. The basic compound used to neutralize the different anionic surfactants may be the same or different.

When neutralized, the anionic surfactants and basic compounds are preferably used in a ratio of about 1:1. One basic compound may be used to neutralize one or more anionic surfactants. In other embodiments, more than one basic compound may be used to neutralize one or more anionic surfactants.

Exemplary nonionic surfactants include ethylene oxide-propylene oxide block copolymers; ethylene oxide-butylene oxide block copolymers; C₂₋₆ alkyl adducts of ethylene oxide-propylene oxide block copolymers; C₂₋₆ alkyl adducts of ethylene oxide-butylene oxide block copolymers; polypropylene glycols; polyethylene glycols; polyarylphenol polyethoxy ethers; polyalkylphenol polyethoxy ethers; polyglycol ether derivatives of aliphatic or cycloaliphatic alcohols or of saturated or unsaturated fatty acids and alkylphenols, said derivatives containing 3 to 30 glycol ether groups and 8 to 20 carbon atoms in the (aliphatic) hydrocarbon moiety and 6 to 18 carbon atoms in the alkyl moiety of the alkylphenols; mono-, di- and tri(C₁₂₋₂₀ alkyl)esters of polyoxyethylene sorbitan; alkoxylated vegetable oils; alkoxylated acetylenic diols; alkyl polyglycosides and mixtures thereof.

The ethylene oxide-propylene oxide block copolymers may comprise alkyl or alkyphenol ether bases, such as butyl ether, methyl ether, propyl ether, ethyl ether, or mixtures thereof. Commercially available nonionic surfactants include, for example, TOXIMUL® 8320 (Stepan Corporation, Northfield, IL) (butyl ether derivative of EO/PO block copolymer), WITCONOL® NS-500LQ (CK Witco Corporation, Greenwich, CT) (butyl ether derivative of EO/PO block copolymer) and WITCONOL® NS-108LQ (CK Witco Corporation, Greenwich, CT) (nonylphenol ether derivative of EO/PO block copolymer).

Other suitable non-ionic surfactants are the water-soluble, 20 to 250 ethylene glycol ether groups containing polyadducts of ethylene oxide and propylene oxide, ethylene diamino polypropylene glycol and alkyl polypropylene glycol with 1 to 10 carbon atoms in the alkyl moiety, the substances normally contain 1 to 5 ethylene glycol units per propylene glycol unit. Examples of non-ionic surfactants are nonylphenol polyethoxy ethanols, vegetable oil polyglycol ethers, polyadducts of ethylene oxide and propylene oxide, tributyl phenoxy polyethoxy ethanol, octyl phenoxy polyethoxy ethanol. Preferred are fatty acid esters of polyoxy ethylene sorbitan, such as polyoxy ethylene sorbitan trioleate.

Preferably, the surfactant system according to the present invention consists of an anionic surfactant and one or two non-ionic surfactants.

Cationic surfactants are preferably quaternary ammonium salts carrying, as N-substituent, at least one C₈ -C₂₂ alkyl radical and, as further substituents, unsubstituted or halogenated lower alkyl, benzyl or hydroxy-lower alkyl radicals. The salts are preferably in the form of halides, methyl sulfates or ethyl sulfates, for example stearyl trimethylammonium chloride or benzyl bis(2-chloroethyl)ethylammonium bromide.

The amount of surfactant(s) depends on the particular active ingredients selected for the composition and the absolute and relative amounts of these desired. Suitable amounts of stabilizing system components selected from the classes or specific examples provided herein can be determined by routine experimentation, the test being that substantially no phase separation, sedimentation or flocculation is exhibited by the composition following storage at 20-25 °C for a period of 24 hours, or, for preferred embodiments, following a longer period of storage over a broader range of temperatures as indicated above. Typically the total concentration of all surfactants in the composition as a whole is about 1% to about 30% by weight, excluding the weight of counterions, if present.

In computing relative amounts of surfactants present in a composition, the weight of water or other diluent supplied with a surfactant, if known, should be excluded. For example, WITCONATE® 79S of CK Witco Corporation contains 52% dodecylbenzene sulfonic acid triethanolamine salt. In a composition containing 1% WITCONATE® 79S, the concentration of dodecylbenzene sulfonic acid triethanolamine salt should be computed as 0.52%.

Suitable water-immiscible solvents are preferably selected from the group consisting of aromatic hydrocarbons, aliphatic hydrocarbons, dialkylene glycol dialkyl ethers, ketones, alkyl esters of acetic acid or mixtures thereof.

Aromatic and aliphatic hydrocarbons such as hexane, cyclohexane, benzene, toluene, xylene, mineral oil or kerosene or substituted naphthalenes, mixtures of mono- and polyalkylated aromatics are commercially available under the registered trademarks Solvesso^{®} and Shellsol^{®} and Petrol Spezial^{®}. Preferred ketones include acetophenone. Representative alkyl esters of acetic acid include EXXATE™ fluids, such as EXXATE™ 800, available from ExxonMobil Chemical Company, Houston, TX.

A safener in accordance with the invention may, depending on the intended purpose, be used to pre-treat the seed material of the cultivated plant (dressing the seed or the seedlings) or may be incorporated into the soil before or after sowing. It may, however, also be applied, alone or together with the herbicide and the oil adjuvant, after the emergence of the plants. The treatment of the plants or seed with the safener can therefore, in principle, be effected independently of the time at which the herbicide is applied. The treatment of the plants can, however, also be carried out by applying the herbicide, oil adjuvant and safener simultaneously. The rate of application of the safener in relation to the herbicide depends largely on the method of application. In the case of field treatment, which is effected either using a tank mixture with a combination of the safener and the herbicide or by the separate application of the safener and the herbicide, the ratio of herbicide to safener is generally from 100:1 to 1:10, preferably from 20:1 to 1:1. In the case of field treatment, from 0.001 to 1.0 kg of safener/ha, preferably from 0.001 to 0.25 kg of safener/ha, are generally applied.

It is also an object of the invention to provide selective pesticidal compositions obtainable by diluting the emulsifiable concentrate of the present invention in a suitable amount of water to form an oil-in-water emulsion.

It is another object of the invention to provide a method for the selective control of weeds in crops of useful plants, which method comprises treating the useful plants, their seeds or seedlings or the crop area thereof with the pesticidal compositions of the present invention.

The ECs of the present invention may preferably be in a concentrated form whereas the end-user generally employs diluted compositions. Said compositions may be diluted to concentrations down to 0.01% of active ingredient (a.i.). The compositions are typically applied in amounts sufficient to deliver from about 0.006 to 0.6 kg a.i./ha.

The composition according to the invention is suitable for all methods of application conventionally used in agriculture, e.g. pre-emergence application, post-emergence application and seed dressing. The compositions according to the invention are preferably used for post-emergence control of weeds.

The composition according to the invention is suitable especially for controlling weeds in crops of useful plants, such as cereals, rape, sugar beet, sugar cane, plantation crops, rice, maize and soybeans. Particularly preferred crops are maize, rice, soybeans and cereals such as wheat or barley. "Crops" are to be understood also to include those crops that have been made tolerant to herbicides or classes of herbicides as a result of conventional methods of breeding or genetic engineering. The components used in the composition of the invention can be applied in a variety of ways known to those skilled in the art, at various concentrations. The rate at which the herbicidal compositions are applied will depend upon the particular type of weed to be controlled, the degree of control required, and the timing and method of application.

Crop areas are areas of land on which the cultivated plants are already growing or in which the seeds of those cultivated plants have been sown, and also areas of land on which it is intended to grow those cultivated plants.

The weeds to be controlled may be either dicotyledonous or, preferably, monocotyledonous weeds, for example the monocotyledonous weeds Avena, Agrostis, Phalaris, Lolium, Bromus, Alopecurus, Setaria, Digitaria, Brachiaria, Echinochloa, Panicum, Sorghum hal./bic., Rottboellia, Cyperus, Brachiaria, Echinochloa, Scirpus, Monochoria and Sagittaria and the dicotyledonous weeds Sinapis, Chenopodium, Stellaria, Galium, Viola, Veronica, Matricaria, Papaver, Solanum, Abutilon, Sida, Xanthium, Amaranthus, Ipomoea and Chrysanthemum.

Other active ingredients such as co-herbicides, fungicides, insecticides, acaricides and nematicides may be present in the emulsifiable concentrate or may be added as a tank-mix partner with the emulsifiable concentrate.

These compositions may also comprise other auxiliaries such as chemical stabilizers, viscosity controlling agents, thickeners, binders, tackifiers, fertilizers and anti-foam agents.

Suitable stabilizers include epoxidized animal or vegetable oils, such as epoxidized soybean oil.

Representative anti-foam agents are silica, polydialkylsiloxanes, in particular polydimethylsiloxanes, fluoroaliphatic esters or perfluoroalkylphosphonic/ perfluoroalkylphosphonic acids or the salts thereof and mixtures thereof. Preferred are polydimethylsiloxanes.

For a clearer understanding of the invention, specific examples are set forth below. These examples are merely illustrations and are not to be understood as limiting the scope and underlying principles of the invention in any way. Indeed, various modifications of the invention in addition to those shown and described herein will become apparent to those skilled in the art from the following examples and foregoing description.

### Preparation of Test Samples

In order to demonstrate the effect of water on the stability of the compositions of the present invention, a series of emulsifiable concentrate formulations were prepared by dissolving clodinifop-propargyl, cloquintocet-mexyl, Atplus® 300F surfactant blend and water in a mixture of methylated rape seed oil and Exxate 800 in the proportions (wt %) given in Table 1 below. The pH of the compositions when diluted to 1% concentration in water was measured by pH electrode.

Samples of the emulsifiable concentrate compositions were placed in storage at a temperature of 70 °C, and the concentration of clodinofop-propargyl and cloquintocet-mexyl ingredients was measured over time by gas chromatographic techniques known in the art. Based on these measurements a half-life for each ingredient could be calculated.

**Table 1**

| **Composition** | **1** | **2** | **3** | **4** |
|---|---|---|---|---|
| Clodinofop-propargyl | 6.5 | 6.5 | 6.5 | 6.5 |
| Cloquintocet-mexyl | 1.7 | 1.7 | 1.7 | 1.7 |
| Atplus 300 F Surfactant | 13.2 | 13.2 | 13.2 | 13.2 |
| Methylated Rape Seed Oil | 34.8 | 34.8 | 34.8 | 34.8 |
| Exxate 800 | 40.8 | 42.8 | 43.5 | 43.7 |
| Water | 3.0 | 1.0 | 0.3 | 0.1 |
| Total | 100.0 | 100.0 | 100.0 | 100.0 |
| pH (1% solution) | 5.61 | 5.67 | 5.78 | 5.51 |
| Clodinofop-p Half-Life at 70 °C (Days) | 39.8 | 50.4 | 54.4 | 58.2 |
| Cloquintocet-m Half-Life at 70 °C (Days) | 18.7 | 23.4 | 25.3 | 26.3 |

The half-life data of Table 1 indicate that the water content of the compositions strongly influence the chemical stability of the active ingredients during storage. The optimum chemical stability of the active ingredients is observed when the water content is maintained below about 3%.

In order to demonstrate the effects of pH on the stability of the compositions of the present invention, emulsifiable concentrate formulations were prepared by dissolving clodinifop-propargyl, cloquintocet-mexyl, Atplus® 300F, AgRHOSpec 6713, Bio-Soft S-101 and water in a mixture of methylated rape seed oil, acetophenone and Exxate 800 in the proportions (wt %) given in Table 2 below. The compositions exhibit a range of pH values when diluted to 1% concentration in water.

**Table 2**

| **Composition** | **5** | **6** | **7** | **8** | **9** | **10** |
|---|---|---|---|---|---|---|
| Clodinofop-propargyl | 6.5 | 6.5 | 6.5 | 6.5 | 6.5 | 6.5 |
| Cloquintocet-mexyl | 1.7 | 1.7 | 1.7 | 1.7 | 1.7 | 1.7 |
| Atplus 300 F Surfactant | 13.2 | 13.2 | 13.2 | 13.2 | 13.2 | 13.2 |
| Methylated Rape Seed Oil | 34.9 | 34.9 | 34.9 | 34.9 | 34.9 | 34.9 |
| Acetophenone | 7.0 | 7.0 | 7.0 | 7.0 | 7.0 | 7.0 |
| Exxate 800 | 30.07 | 30.18 | 30.08 | 30.11 | 30.08 | 30.07 |
| Water | 1.45 | 1.43 | 1.44 | 1.41 | 1.44 | 1.45 |
| AgRHOSpec 6713 | 4.36 | 4.45 | 4.49 | 4.49 | 4.52 | 4.66 |
| Bio-Soft S-101 | 0.82 | 0.73 | 0.69 | 0.69 | 0.66 | 0.52 |
| Total | 100.00 | 100.00 | 100.00 | 100.00 | 100.00 | 100.00 |
| pH (1% solution) | 4.39 | 4.91 | 5.15 | 5.50 | 5.72 | 7.76 |
| Clodinofop-p Half-Life at 70°C (Days) | 28.1 | 48.3 | 59.0 | 65.1 | 69.0 | 47.6 |
| Cloquintocet-m Half-Life at 70 °C (Days) | 18.6 | 17.9 | 21.3 | 27.0 | 33.9 | 36.7 |

Samples of the emulsifiable concentrate compositions were placed in storage at a temperature of 70 °C, and the concentration of clodinofop-propargyl and cloquintocet-mexyl ingredients was measured over time by gas chromatographic techniques known in the art. Based on these measurements a half-life for each ingredient could be calculated.

The data of Table 2 indicate that the pH of the compositions strongly influence the chemical stability of the active ingredients during storage. The optimum chemical stability of the active ingredients is observed when the pH is maintained between about 4.5 and 8.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention as defined in the following claims.

## Claims

1. An emulsifiable concentrate comprising:
a) a herbicidally effective amount, which is 1 to 30 % by weight, of at least one herbicide;
b) optionally, an amount, which is effective for antagonism of a herbicide, of at least one safener;
c) 5 to 80 % by weight of at least one oil adjuvant, wherein said oil adjuvant comprises an alkyl ester of a plant oil;
d) an amount of at least one water-immiscible solvent sufficient to keep the active ingredient and the safener in solution in the presence of the adjuvant, wherein the amount of the at least one water-immiscible solvent is 5 to 70 % by weight; and
e) an emulsifying surfactant system in an amount sufficient to form an oil-in-water emulsion when the formulation is added to water, wherein the amount of the emulsifying surfactant system is between 1 and 30 % by weight;
with the proviso that:
a) comprises a herbicidally effective amount of at least one compound of formula I 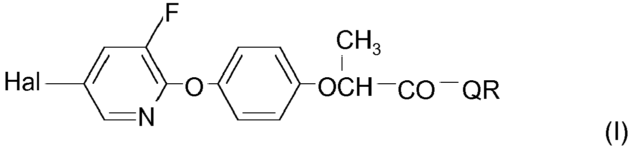 wherein Hal is halogen,
Q is oxygen or sulfur,
R is hydrogen, an alkali metal ion, or a C1 -C6 -alkyl group which is straight-chain or branched-chain, and which is unsubstituted or substituted by a C3 -C6 -alkynyl group; and
b) comprises an amount, which is effective for antagonism of a herbicide, of at least one quinoline derivative safener comprising: cloquintocet; an alkali metal, alkaline earth metal, sulfonium or ammonium cation of cloquintocet; or cloquintocet-mexyl;
and wherein the emulsifiable concentrate has a pH in the range of 4.5 to 8.0 when diluted to 1% concentration in distilled water; and
wherein the emulsifiable concentrate contains less than 2.5 % of water.

2. The emulsifiable concentrate of claim 1 comprising 25 to 70 % by weight of the at least one oil adjuvant.

3. The emulsifiable concentrate of claim 1 or 2 wherein the amount of the at least one water-immiscible solvent is 25 to 60 % by weight.

4. The emulsifiable concentrate of claim 1, 2 or 3 which has a pH in the range of 5.0 to 7.0 when diluted to 1% concentration in distilled water.

5. The emulsifiable concentrate of claim 1, 2, 3 or 4 containing less than 2.0 % of water.

6. The emulsifiable concentrate of claim 5 wherein the compound of formula I is clodinafop-propargyl.

7. The emulsifiable concentrate of claim 1, 2, 3, 4 or 5, wherein the oil adjuvant comprises a methyl ester of a plant oil.

8. The emulsifiable concentrate of claim 7 wherein the oil adjuvant comprises a methyl ester of canola oil.

9. The emulsifiable concentrate of claim 1, 2, 3, 4 or 5, wherein the emulsifying surfactant system comprises at least one non-ionic surfactant.

10. The emulsifiable concentrate of claim 1 wherein the safener comprises cloquintocet-mexyl.

11. The emulsifiable concentrate of claim 1, 2, 3, 4 or 5, comprising clodinafop-propargyl together with the safener cloquintocet-mexyl.

12. The emulsifiable concentrate of claim 1, 2, 3, 4 or 5, further comprising at least one member selected from the group consisting of co-herbicides, fungicides, insecticides, acaricides and nematicides.

13. The emulsifiable concentrate of claim 1, 2, 3, 4 or 5, further comprising at least one member selected from the group consisting of chemical stabilizers, viscosity controlling agents, thickeners, binders, tackifiers, fertilizers and anti-foam agents.

14. A pesticidal composition obtained by diluting an emulsifiable concentrate according to claim 1, 2, 3, 4 or 5 in a suitable amount of water to form an oil-in-water emulsion.

15. The pesticidal composition of claim 14 further comprising at least one member selected from the group consisting of co-herbicides, fungicides, insecticides, acaricides, and nematicides.

16. A method for the selective control of weeds in crops of useful plants, which method comprises treating the useful plants, their seeds or seedlings or the crop area thereof with a pesticidal composition according to claim 14.

17. The method according to claim 16 wherein the crops of useful plants are selected from the group consisting of maize, cereals, rice and soybeans.

18. The method according to claim 17 wherein the crops of useful plants are cereals.

19. The method according to claim 18 wherein the crop of useful plants is wheat or barley.

## Patentansprüche

1. Emulsionskonzentrat, das Folgendes umfasst:
a) eine herbizid wirksame Menge, bei der es sich um 1 bis 30 Gew.-% handelt, an mindestens einem Herbizid;
b) gegebenenfalls eine für den Antagonismus eines Herbizids wirksame Menge an mindestens einem Safener;
c) 5 bis 80 Gew.-% an mindestens einem Öladjuvans, wobei das Öladjuvans einen Alkylester eines Pflanzenöls umfasst;
d) solch eine Menge an mindestens einem nicht mit Wasser mischbaren Lösungsmittel, die ausreicht, um den Wirkstoff und den Safener in Gegenwart des Adjuvans in Lösung zu halten, wobei die Menge des mindestens einen nicht mit Wasser mischbaren Lösungsmittels 5 bis 70 Gew.-% beträgt; und
e) ein emulgierendes Tensidsystem in solch einer Menge, die ausreicht, um, wenn die Formulierung zu Wasser zugesetzt wird, eine Öl-in-Wasser-Emulsion zu bilden, wobei die Menge des emulgierenden Tensidsystems zwischen 1 und 30 Gew.-% beträgt;
mit der Maßgabe, dass:
a) eine herbizid wirksame Menge an mindestens einer Verbindung der Formel (I) umfasst, 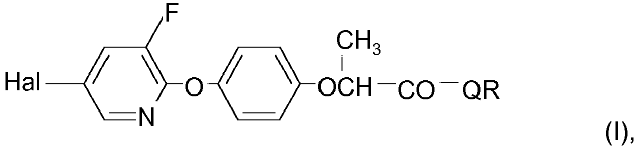 worin Hal Halogen bedeutet,
Q Sauerstoff oder Schwefel bedeutet,
R Wasserstoff, ein Alkalimetallion oder eine C₁-C₆-Alkylgruppe, die geradkettig oder verzweigt ist und die unsubstituiert oder durch eine C₃-C₆-Alkinylgruppe substituiert ist, bedeutet,
und
b) eine Menge, die für einen Antagonismus eines Herbizids wirksam ist, an mindestens einem Chinolinderivat-Safener umfassend: Cloquintocet; ein Alkalimetall; Erdalkalimetall; Sulfonium- oder Ammoniumkation von Cloquintocet; oder Cloquintocet-mexyl umfasst;
und wobei das Emulsionskonzentrat, wenn es mit destilliertem Wasser auf eine Konzentration von 1% verdünnt wird, einen pH-Wert im Bereich von 4,5 bis 8,0 aufweist; und
wobei das Emulsionskonzentrat weniger als 2,5% Wasser enthält.

2. Emulsionskonzentrat nach Anspruch 1, das 25 bis 70 Gew.-% des mindestens einen Öladjuvans umfasst.

3. Emulsionskonzentrat nach Anspruch 1 oder 2, wobei die Menge des mindestens einen nicht mit Wasser mischbaren Lösungsmittels 25 bis 60 Gew.-% beträgt.

4. Emulsionskonzentrat nach Anspruch 1, 2 oder 3, das, wenn es mit destilliertem Wasser auf eine Konzentration von 1% verdünnt wird, einen pH-Wert im Bereich von 5,0 bis 7,0 aufweist.

5. Emulsionskonzentrat nach Anspruch 1, 2, 3 oder 4, das weniger als 2,0% Wasser enthält.

6. Emulsionskonzentrat nach Anspruch 5, wobei es sich bei der Verbindung der Formel I um Clodinafop-propargyl handelt.

7. Emulsionskonzentrat nach Anspruch 1, 2, 3, 4 oder 5, wobei das Öladjuvans einen Methylester eines Pflanzenöls umfasst.

8. Emulsionskonzentrat nach Anspruch 7, wobei das Öladjuvans einen Methylester von Canolaöl umfasst.

9. Emulsionskonzentrat nach Anspruch 1, 2, 3, 4 oder 5, wobei das emulgierende Tensidsystem mindestens ein nichtionisches Tensid umfasst.

10. Emulsionskonzentrat nach Anspruch 1, wobei der Safener Cloquintocet-mexyl umfasst.

11. Emulsionskonzentrat nach Anspruch 1, 2, 3, 4 oder 5, das Clodinafop-propargyl gemeinsam mit dem Safener Cloquintocet-mexyl umfasst.

12. Emulsionskonzentrat nach Anspruch 1, 2, 3, 4 oder 5, das weiterhin mindestens ein Mitglied, ausgewählt aus der Gruppe bestehend aus Co-Herbiziden, Fungiziden, Insektiziden, Akariziden und Nematiziden, umfasst.

13. Emulsionskonzentrat nach Anspruch 1, 2, 3, 4 oder 5, das weiterhin mindestens ein Mitglied, ausgewählt aus der Gruppe bestehend aus chemischen Stabilisatoren, viskositätskontrollierenden Agenzien, Verdickungsmitteln, Bindemitteln, Haftmitteln, Düngemitteln, und Antischaummitteln, umfasst.

14. Pestizide Zusammensetzung, die dadurch erhalten wird, dass man ein Emulsionskonzentrat nach Anspruch 1, 2, 3, 4 oder 5 mit einer geeigneten Wassermenge zu einer Öl-in-Wasser-Emulsion verdünnt.

15. Pestizide Zusammensetzung nach Anspruch 14, die weiterhin mindestens ein Mitglied, ausgewählt aus der Gruppe bestehend aus Co-Herbiziden, Fungiziden, Insektiziden, Akariziden und Nematiziden, umfasst.

16. Verfahren für die selektive Bekämpfung von Unkräutern in Nutzpflanzenkulturen, bei dem man die Nutzpflanzen, ihre Samen oder Keimpflanzen oder ihre landwirtschaftliche Nutzfläche mit einer pestiziden Zusammensetzung nach Anspruch 14 behandelt.

17. Verfahren nach Anspruch 16, wobei die Nutzpflanzenkulturen aus der Gruppe bestehend aus Mais, Getreide, Reis und Sojabohnen ausgewählt sind.

18. Verfahren nach Anspruch 17, wobei es sich bei den Nutzpflanzenkulturen um Getreide handelt.

19. Verfahren nach Anspruch 18, wobei es sich bei der Nutzpflanzenkultur um Weizen oder Gerste handelt.

## Revendications

1. Concentré émulsifiable comprenant :
a) une quantité herbicide efficace, qui est de 1 à 30 % en poids, d'au moins un herbicide ;
b) facultativement, une quantité, qui est efficace pour l'antagonisme d'un herbicide, d'au moins un phytoprotecteur ;
c) 5 à 80 % en poids d'au moins un adjuvant huileux, où ledit adjuvant huileux comprend un ester d'alkyle d'une huile végétale ;
d) une quantité d'au moins un solvant immiscible dans l'eau suffisante pour maintenir la substance active et le phytoprotecteur en solution en présence de l'adjuvant, où la quantité de l'au moins un solvant immiscible dans l'eau est de 5 à 70 % en poids ; et
e) un système de tensioactif émulsifiant en une quantité suffisante pour former une émulsion d'huile dans l'eau lorsque la formulation est ajoutée à de l'eau, où la quantité du système de tensioactif émulsifiant est comprise entre 1 et 30 % en poids ;
à condition que :
a) comprend une quantité herbicide efficace d'au moins un composé de formule I 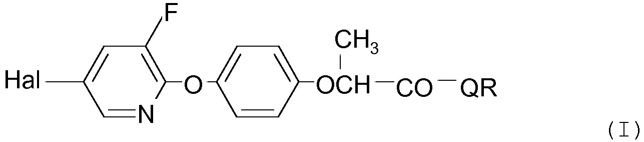 dans lequel Hal est halogène,
Q est oxygène ou soufre,
R est hydrogène, un ion de métal alcalin, ou un groupe alkyle en C1-C6 qui est à chaîne linéaire ou à chaîne ramifiée, et qui est non substitué ou substitué par un groupe alcynyle en C3-C6 ; et
b) comprend une quantité, qui est efficace pour l'antagonisme d'un herbicide, d'au moins un phytoprotecteur de dérivé de quinoléine comprenant : le cloquintocet ; un cation de métal alcalin, métal alcalino-terreux, sulfonium ou ammonium de cloquintocet ; ou cloquintocet-mexyl ;
et où le concentré émulsifiable a un pH dans la plage de 4,5 à 8,0 lorsqu'il est dilué à une concentration de 1 % dans de l'eau distillée ; et
où le concentré émulsifiable contient moins de 2,5 % d'eau.

2. Concentré émulsifiable de la revendication 1 comprenant 25 à 70 % en poids de l'au moins un adjuvant huileux.

3. Concentré émulsifiable de la revendication 1 ou 2 dans lequel la quantité de l'au moins un solvant immiscible dans l'eau est de 25 à 60 % en poids.

4. Concentré émulsifiable de la revendication 1, 2 ou 3 qui a un pH dans la plage de 5,0 à 7,0 lorsqu'il est dilué à une concentration de 1 % dans de l'eau distillée.

5. Concentré émulsifiable de la revendication 1, 2, 3 ou 4 contenant moins de 2,0 % d'eau.

6. Concentré émulsifiable de la revendication 5 dans lequel le composé de formule I est clodinafop-propargyl.

7. Concentré émulsifiable de la revendication 1, 2, 3, 4 ou 5, dans lequel l'adjuvant huileux comprend un ester méthylique d'une huile végétale.

8. Concentré émulsifiable de la revendication 7 dans lequel l'adjuvant huileux comprend un ester méthylique d'huile de canola.

9. Concentré émulsifiable de la revendication 1, 2, 3, 4 ou 5, dans lequel le système de tensioactif émulsifiant comprend au moins un tensioactif non ionique.

10. Concentré émulsifiable de la revendication 1 dans lequel le phytoprotecteur comprend cloquintocet-mexyl.

11. Concentré émulsifiable de la revendication 1, 2, 3, 4 ou 5, comprenant clodinafop-propargyl conjointement avec le phytoprotecteur cloquintocet-mexyl.

12. Concentré émulsifiable de la revendication 1, 2, 3, 4 ou 5, comprenant en outre au moins un membre choisi dans le groupe constitué de co-herbicides, fongicides, insecticides, acaricides et nématicides.

13. Concentré émulsifiable de la revendication 1, 2, 3, 4 ou 5, comprenant en outre au moins un membre choisi dans le groupe constitué de stabilisants chimiques, agents de contrôle de viscosité, épaississants, liants, agents poisseux, engrais et agents antimousse.

14. Composition pesticide obtenue par dilution d'un concentré émulsifiable selon la revendication 1, 2, 3, 4 ou 5 dans une quantité adaptée d'eau pour former une émulsion d'huile dans l'eau.

15. Composition pesticide de la revendication 14 comprenant en outre au moins un membre choisi dans le groupe constitué de co-herbicides, fongicides, insecticides, acaricides et nématicides.

16. Procédé pour le contrôle sélectif des mauvaises herbes dans des cultures de plantes utiles, ledit procédé comprenant le traitement des plantes utiles, leurs graines ou semis ou la zone de culture de celles-ci avec une composition pesticide selon la revendication 14.

17. Procédé selon la revendication 16 dans lequel les cultures de plantes utiles sont choisies dans le groupe constitué du maïs, de céréales, de riz et de soja.

18. Procédé selon la revendication 17 dans lequel les cultures de plantes utiles sont des céréales.

19. Procédé selon la revendication 18 dans lequel la culture de plantes utiles est le blé ou l'orge.
